# EUROPEAN PATENT SPECIFICATION

(11) **EP 3 537 649 B1**
(45) Date of publication and mention of the grant of the patent: **04.10.2023**
(21) Application number: 17884794.3
(22) Date of filing: 18.12.2017
(51) Int. Cl.: H04L 5/00, H04W 24/10, H04W 72/04

(54) **METHOD FOR TRANSMITTING AND RECEIVING REFERENCE SIGNAL, ACCESS NETWORK DEVICE AND TERMINAL DEVICE**
VERFAHREN ZUM SENDEN UND EMPFANGEN EINES REFERENZSIGNALS, ZUGANGSNETZWERKVORRICHTUNG UND ENDGERÄTEVORRICHTUNG
PROCÉDÉ DE TRANSMISSION ET DE RÉCEPTION DE SIGNAL DE RÉFÉRENCE, DISPOSITIF DE RÉSEAU D'ACCÈS, ET DISPOSITIF TERMINAL

(30) Priority: 21.12.2016 CN 201611192635
(43) Date of publication of application: 11.09.2019
(73) Proprietor: Huawei Technologies Co., Ltd., Longgang District Shenzhen, Guangdong 518129 (CN)
(72) Inventor: XIE, Xinqian, Shenzhen Guangdong 518129 (CN); GUO, Zhiheng, Shenzhen Guangdong 518129 (CN); SUN, Wei, Shenzhen Guangdong 518129 (CN); CHENG, Xingqing, Shenzhen Guangdong 518129 (CN)
(74) Representative: Epping - Hermann - Fischer
(86) International application number: PCT/CN2017/116832
(87) International publication number: WO 2018/113618

(56) References cited:
- EP-A1- 2 533 589
- WO-A1-2014/113971
- WO-A1-2014/113971
- CN-A- 102 036 301
- CN-A- 104 125 186
- US-A1- 2011 201 376
- US-A1- 2015 155 993
- US-A1- 2015 373 694

## Description

### TECHNICAL FIELD

This application relates to the communications field, and more specifically, to a reference signal sending method, an access network device, a wireless communications system, and a computer readable storage medium.

### BACKGROUND

In a wireless communications system, to fully utilize space resources, a network device may be equipped with a plurality of antennas to transmit data by using a multiple-input multiple-output (Multiple-Input Multiple-Output, MIMO) technology. In other words, the network device may transmit a plurality of data streams on a same time-frequency resource. Each data stream is transmitted at an independent spatial layer and data transmitted at each spatial layer is mapped to a different antenna port for sending. Coefficients of channels between different antenna ports and the terminal are different, and a coefficient of a channel between each antenna port and the terminal device needs to be estimated during channel estimation. Therefore, the network device configures a different demodulation reference signal (De-Modulation Reference Signal, DMRS) for each antenna port, and sends the DMRS corresponding to each antenna port to the terminal device, so that the terminal device can implement channel estimation.

During DMRS sending in the prior art, a fixed resource element (Resource Element, RE) is configured for each antenna port, to transmit a DMRS corresponding to the antenna port. Therefore, when the network device transmits DMRSs corresponding to only some antenna ports, REs corresponding to the other antenna ports neither transmit nor carry data. Consequently, a resource waste is caused, resource utilization is reduced, and precision of channel estimation using the DMRS transmitted in such a resource configuration manner is not high.

EP 2 533 589 A1 discloses a method, a device and a system for indicating terminal specific Demodulation Reference Signal (DMRS). The method includes that: a network side creates signal indicating information, and sends the created signal indicating information to a terminal (S501); the terminal, according to Transmission Block (TB) indicating information of the TB and multiple bits control information which are included in the signal indicating information, confirms DMRS pattern information, antenna port information and a scrambling ID of a reference signal sequence (S502) allocated for itself. The method, the device and the system provide by the invention, compared to the prior art, reduce signaling overhead which indicates the terminal specific DMRS, thus reducing resources waste of the system.

US 2015/155993 A1 discloses methods and nodes for transmission of information, over at least one antenna port, in a subframe, which information is received by a receiver in a wireless communication system. Demodulation of the information entity by the receiver is enabled by also transmitting a Demodulation Reference Signal, DM-RS, comprising a DM-RS pattern, wherein positions in the DM-RS pattern are associated with at least one antenna port for transmission of the information entity. The method includes defining, for at least one subframe, a set of at least two distinct DM-RS patterns, assigning one DM-RS pattern, from the defined set of DM-RS patterns, to the receiver, and transmitting the information entity on the at least one antenna port associated with the assigned DM-RS pattern.

WO 2014/113971 A1 discloses a method comprising: a user equipment receiving a DMRS indication message sent by a base station, the DMRS indication message being used for indicating a DMRS pattern of a DMRS antenna port, the DMRS pattern being a location of a time-frequency resource having a DMRS and/or a location of a resource element (RE) occupied by the DMRS in the time-frequency resource (101); the user equipment determining the DMRS pattern of the DMRS antenna port according to the DMRS indication message (102); and the user equipment acquiring the DMRS according to the DMRS pattern of the DMRS antenna port (103).

US 2011/201376 A1 discloses a method and an arrangement in a radio network node for adapting transmission power of resource elements for demodulation reference signals, referred to as "reference elements" are provided.

### SUMMARY

Embodiments of this application provide a reference signal sending method, an access network device, a wireless communications system, and a computer readable storage medium, to improve time-frequency resource utilization. The invention is defined by the independent claims. Advantageous embodiments of the invention are given in the dependent claims. Further aspects of the disclosed methods, devices and systems are disclosed below, which provide a better understanding of the invention.

According to a first aspect, a reference signal sending method according to claim 1 is provided.

The determining, by an access network device, a DMRS pattern corresponding to the antenna port is based on a quantity of spatial layers of to-be-transmitted data and a status of a radio channel between the access network device and a terminal device.

The first indication information includes a first identifier, and the first identifier is a joint identifier of the antenna port and the DMRS pattern. It should be understood that a joint identifier may mean that one identifier corresponds to a plurality of types of information, and therefore an indication of the plurality of types of information can be implemented by using one identifier.

In the prior art, different antenna ports correspond to a same DMRS pattern (in other words, the DMRS pattern is fixed), and the DMRS pattern cannot be flexibly adjusted based on a transmission requirement of a reference signal. However, in this application, different antenna ports may correspond to different DMRS patterns, a DMRS pattern corresponding to an antenna port can be flexibly determined, and the DMRS pattern corresponding to the antenna port is indicated by the first indication information, so that the network device and the terminal device can send and receive the DMRS based on the DMRS pattern corresponding to the antenna port. Compared with the prior art, a DMRS can be more flexibly sent and received in this application. The terminal device may determine, by using the first identifier in the first indication information, both the antenna port for transmitting data and the DMRS pattern corresponding to the antenna port, so that the terminal device receives the DMRS through the antenna port on the time-frequency resource corresponding to the DMRS pattern. In addition, indicating the antenna port and the DMRS pattern by using one identifier in the first indication information can reduce signaling overheads. It should be understood that the first identifier may directly identify a port number of the antenna port.

Optionally, the foregoing reference signal sending method according to the first aspect further includes: sending, by the access network device, second indication information to the terminal device, where the second information indicates whether transmit power of the DMRS is increased, or indicates an increased amount of transmit power of the DMRS.

Whether the transmit power of the DMRS of the access network device changes is obtained by using the second indication information, so that when the transmit power of the DMRS changes, the terminal device can accurately determine current transmit power of the DMRS and accurately receive the DMRS at the current transmit power of the DMRS.

Optionally, the determining, by an access network device, a DMRS pattern corresponding to the antenna port includes: determining, by the access network device, the DMRS pattern corresponding to the antenna port, based on the quantity of spatial layers and a first correspondence, where the first correspondence is a correspondence between the quantity of spatial layers and the DMRS pattern.

It should be understood that the to-be-transmitted data herein may be data to be transmitted to a plurality of terminal devices by the network device.

In the prior art, different antenna ports correspond to a same DMRS pattern (in other words, the DMRS pattern is fixed), and the DMRS pattern cannot be flexibly adjusted based on a transmission requirement of a reference signal. However, in this application, different antenna ports may correspond to different DMRS patterns, a DMRS pattern corresponding to an antenna port can be flexibly determined, and the DMRS pattern corresponding to the antenna port is indicated by the first indication information, so that the network device and the terminal device can send and receive the DMRS based on the DMRS pattern corresponding to the antenna port. Compared with the prior art, a DMRS can be more flexibly sent and received in this application. Optionally, the first indication information includes a first identifier, and the first identifier is a joint identifier of the antenna port and the DMRS pattern; and the determining, by the terminal device, the DMRS pattern indicated by the first indication information includes: determining, by the terminal device, the DMRS pattern that corresponds to the antenna port identified by the first identifier.

According to a third aspect, an access network device according to claim 9 is provided.

According to a fourth aspect, a wireless communications system (100) according to claim 10 is provided.

According to a fifth aspect, a computer readable storage medium according to claim 11 is provided.

### BRIEF DESCRIPTION OF DRAWINGS

FIG. 1 is a schematic diagram of a DMRS pattern in the prior art;
FIG. 2 is a schematic diagram of an application scenario of a reference signal sending and receiving method according to an embodiment of this application;
FIG. 3 is a schematic flowchart of a reference signal sending and receiving method according to an embodiment of this application;
FIG. 4 is a schematic diagram of a DMRS pattern according to an embodiment of this application;
FIG. 5 is a schematic diagram of a DMRS pattern according to an embodiment of this application;
FIG. 6 is a schematic diagram of a DMRS pattern according to an embodiment of this application;
FIG. 7 is a schematic diagram of a DMRS pattern according to an embodiment of this application;
FIG. 8 is a schematic diagram of a DMRS pattern according to an embodiment of this application;
FIG. 9 is a schematic block diagram of an access network device according to an embodiment of this application;
FIG. 10 is a schematic block diagram of a terminal device according to an embodiment of this application;
FIG. 11 is a schematic block diagram of an access network device according to an embodiment of this application; and
FIG 12 is a schematic block diagram of a terminal device according to an embodiment of this application.

### DESCRIPTION OF EMBODIMENTS

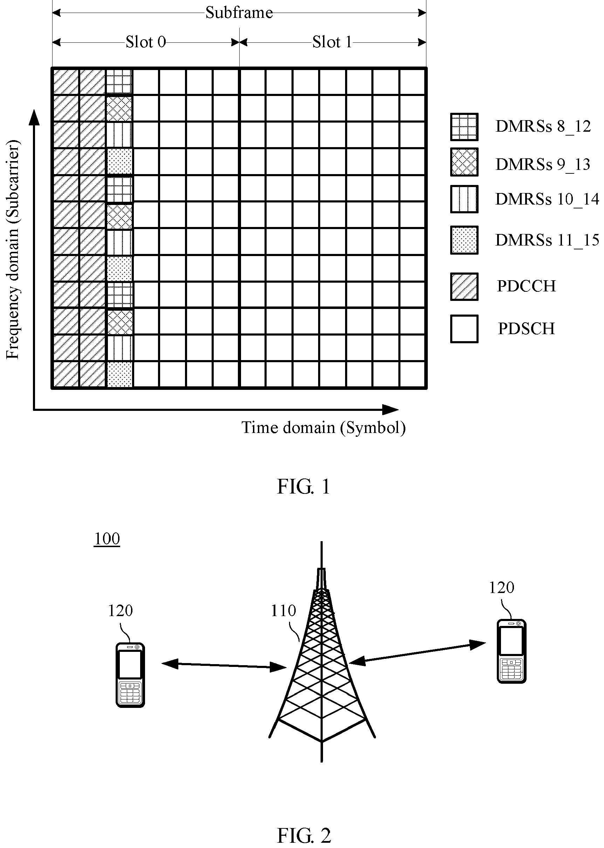

The invention corresponds to the embodiments disclosed in Figures 2, 3, 11 and 12 and the other embodiments are not encompassed by the wording of the claims but are considered as useful for understanding the invention.

The following clearly and completely describes the technical solutions in the embodiments of this application with reference to the accompanying drawings in the embodiments of this application.

It should be understood that, a reference signal sending and receiving method in the embodiments of this application may be applied to various communications systems, for example, current communications systems such as a Global System for Mobile Communications (Global System of Mobile communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, and a Universal Mobile Telecommunications System (Universal Mobile Telecommunications System, UMTS), and may be particularly applied to a future 5th Generation (5G) Mobile Telecommunications system.

Particularly, the technical solutions in the embodiments of this application may be applied to various communications systems based on a non-orthogonal multiple access technology, for example, a sparse code multiple access (Sparse Code Multiple Access, SCMA) system and a low density signature (Low Density Signature, LDS) system. Certainly, the SCMA system and the LDS system may also be referred to as other names in the communications field. Further, the technical solutions in the embodiments of this application may be applied to a multi-carrier transmission system that uses the non-orthogonal multiple access technology, for example, a system that uses the non-orthogonal multiple access technology, an orthogonal frequency division multiplexing (Orthogonal Frequency Division Multiplexing, OFDM) system, a filter bank multicarrier (Filter Bank Multi-Carrier, FBMC) system, a generalized frequency division multiplexing (Generalized Frequency Division Multiplexing, GFDM) system, and a filtered orthogonal frequency division multiplexing (Filtered-OFDM, F-OFDM) system.

A terminal device in the embodiments of this application may be user equipment (User Equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. An access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, a terminal device in a future 5G network, a terminal device in a future evolved public land mobile network (Public Land Mobile Network, PLMN), or the like. This is not limited in the embodiments of this application.

To better understand the reference signal sending and receiving method in the embodiments of this application, the following first describes a DMRS pattern configured in the prior art in detail with reference to FIG 1.

FIG 1 is a schematic diagram of a DMRS pattern that is of a time-frequency resource and that is configured by a communications system for DMRS transmission in the prior art. The communications system supports spatial multiplexing of a maximum of eight-layer data streams. To support simultaneous transmission of the eight-layer data streams, a structure of the DMRS pattern is configured accordingly as a form suitable for eight antenna ports. For ease of description and differentiation, the eight antenna ports are respectively denoted as ports #8 to #15, and each port number corresponds to one antenna port. DMRSs corresponding to the antenna ports are orthogonal to each other in frequency division multiplexing (Frequency Division Multiplexing, FDM) and code division multiplexing (Code Division Multiplexing, CDM) manners. As shown in FIG 1, the DMRSs corresponding to the eight antenna ports are divided into four groups, and the four groups of DMRSs are respectively DMRSs corresponding to ports #8 and #12 (for ease of description, denoted as DMRSs 8_12), DMRSs corresponding to ports #9 and #13 (denoted as DMRSs 9_13), DMRSs corresponding to ports #10 and #14 (denoted as DMRSs 10_14), and DMRSs corresponding to ports #11 and #15 (denoted as DMRSs 11_15). The four groups of DMRSs are transmitted on corresponding REs in a frequency division multiplexing manner, and code division multiplexing is performed on two DMRSs in each group by using an orthogonal cover code (Orthogonal Cover Code, OCC).

In FIG 1, the DMRS pattern is designed based on a maximum quantity of spatial layers or antenna ports supported by the system. A terminal device can send and receive, based on only indication information sent by a network device, data on an antenna port specified by the network device. In this case, the terminal device does not know whether there is data transmission at other transport layers. Therefore, time-frequency resources used by all the eight antenna ports need to be reserved. To be specific, when the network device transmits DMRSs at the eight spatial layers or through the eight antenna ports, all REs configured for the DMRSs are used. However, when the network device transmits a DMRS at only one spatial layer or through one antenna port, for example, the network device transmits the DMRS by using only an RE corresponding to the port #8, REs corresponding to the other antenna ports are used to transmit neither a DMRS nor data. Consequently, a time-frequency resource waste is caused. In conclusion, the DMRS resource configuration manner in the prior art is inflexible, only one fixed DMRS pattern is generated, and a DMRS pattern is not flexibly determined based on channel environments and the like. This may cause low time-frequency resource utilization efficiency and low channel estimation precision (for example, when few resources are allocated to transmit a DMRS, an effect of channel estimation by the terminal device may be poor). Based on this, an embodiment of this application provides a reference signal method to flexibly determine a DMRS pattern corresponding to an antenna port, thereby improving time-frequency resource utilization. The following describes the reference signal sending and receiving method in the embodiments of this application in detail with reference to FIG 2 to FIG 8.

FIG 2 is a schematic diagram of a possible application scenario of a reference signal sending and receiving method according to an embodiment of this application. As shown in FIG 2, a wireless communications system 100 includes an access network device 110 and at least one terminal device 120 within a coverage area of the radio access network device 110. The access network device 110 may determine a DMRS pattern and send a DMRS to the terminal device based on a resource corresponding to the DMRS pattern. Optionally, the terminal device 120 may be an access terminal, user equipment (User Equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, a terminal device in a future 5G network, a terminal device in a future evolved PLMN, or the like. In addition, the access network device 110 herein may be a base station.

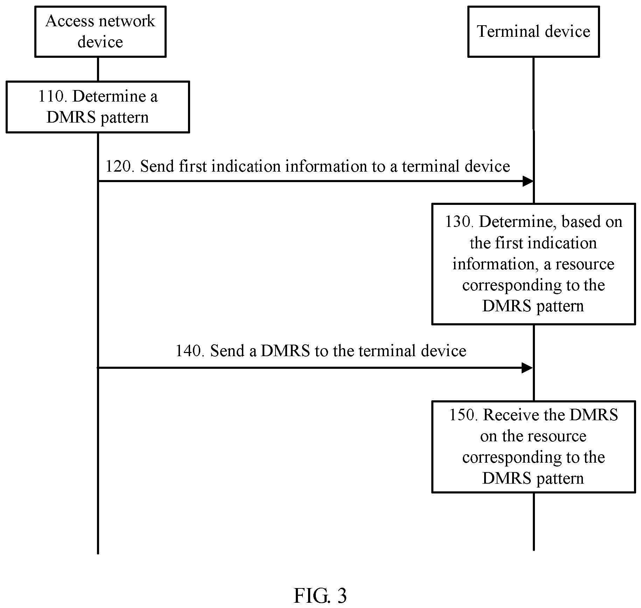

The following describes a reference signal sending and receiving method according to an embodiment of this application in detail with reference to FIG 3. The method in FIG 3 includes the following steps.

110. An access network device determines a DMRS pattern corresponding to an antenna port.

The DMRS pattern may be used to indicate distribution of a time-frequency resource for sending a DMRS in entire system resources, and the access network device and a terminal device may determine, based on the DMRS pattern, the time-frequency resource for transmitting the DMRS. The DMRS pattern may have an association with a quantity of spatial layers transmitted by the access network device. When the quantity of spatial layers transmitted by the access network device is different, the DMRS pattern corresponding to the antenna port may be different. In addition, the DMRS pattern may be related to a status of a channel between the access network device and the terminal device. For example, when the channel status is relatively poor, a corresponding DMRS pattern corresponds to a relatively large quantity of resources; when the channel status is relatively good, a corresponding DMRS pattern may correspond to a relatively small quantity of resources.

The access network device determines the DMRS pattern corresponding to the antenna port, based on a quantity of spatial layers of to-be-transmitted data, optionally also on a quantity of antenna ports corresponding to the to-be-transmitted data, and on the status of the channel between the access network device and the terminal device.

It should be understood that the to-be-transmitted data herein may be data to be transmitted to a plurality of terminal devices by the network device.

In this embodiment of this application, the access network device can flexibly determine the DMRS pattern based on some attribute information related to DMRS transmission, and properly allocate time-frequency resources. For example, when channel quality is relatively poor, the access network device may determine that a DMRS pattern including a relatively large quantity of time-frequency resources is the DMRS pattern corresponding to the antenna port, so that channel estimation precision can be improved.

Further, the access network device may determine the DMRS pattern corresponding to the antenna port, based on at least one of the quantity of spatial layers, the quantity of antenna ports, and the channel status.

Optionally, the access network device may determine the DMRS pattern corresponding to the antenna port, based on the quantity of spatial layers of the to-be-transmitted data and a first correspondence between the quantity of spatial layers and the DMRS pattern. The first correspondence may be any one of a plurality of correspondences between the quantity of spatial layers and the DMRS pattern. When determining the DMRS pattern, the access network device may first select one from the plurality of correspondences, and then determine, based on the selected correspondence, the DMRS pattern corresponding to the antenna port.

It should be understood that the terminal device may determine, in a manner similar to that used by the access network device, the DMRS pattern corresponding to the antenna port. Specifically, the terminal device may determine the DMRS pattern corresponding to the antenna port, based on the quantity of spatial layers of the to-be-transmitted data and the first correspondence, where the first correspondence is the correspondence between the quantity of spatial layers and the DMRS pattern; and the terminal device may determine the quantity of spatial layers of the to-be-transmitted data based on third indication information received from the network device, where the third indication information indicates the quantity of spatial layers of the to-be-transmitted data. In other words, the terminal device may obtain the quantity of spatial layers of the to-be-transmitted data based on an indication of the network device. Alternatively, the terminal device may determine the quantity of spatial layers of the to-be-transmitted data based on prestored information.

Specifically, when determining the DMRS pattern corresponding to the antenna port, the access network device may first determine a total quantity of spatial layers of current to-be-transmitted data, and then determine the DMRS pattern corresponding to the antenna port based on a correspondence between the total quantity of spatial layers of the to-be-transmitted data and N DMRS patterns (there may be a plurality of correspondences between the total quantity of spatial layers and the N DMRS patterns, and the access network device may first select one from the plurality of correspondences when determining the DMRS pattern). For example, there are two DMRS patterns in total, and numbers of the two DMRS patterns are successively #1 and #2. One spatial layer of the to-be-transmitted data in total is corresponding to #1 DMRS pattern, or two spatial layers of the to-be-transmitted data in total is corresponding to #2 DMRS pattern. In this way, when determining that there is one to-be-transmitted spatial layer in total, the access network device may determine that the DMRS pattern numbered #1 is a target DMRS pattern, and then may further determine, based on the DMRS pattern numbered #1, a resource for transmitting the DMRS.

It should be understood that a value of N herein may be selected based on an actual application scenario. When N is a relatively large value, the access network device may obtain more specific correspondences between a quantity of spatial layers of the to-be-transmitted data and different DMRS patterns, making configuration more flexible.

Specifically, a total quantity of DMRS patterns may be less than or equal to a maximum quantity of to-be-transmitted spatial layers supported by the access network device. For example, when the maximum total quantity of to-be-transmitted spatial layers supported by the communications system is 8, the quantity of DMRS patterns may be 8, or may be 4 or 5. In other words, the access network device may prestore eight DMRS patterns, or may prestore four or five DMRS patterns.

Optionally, the access network device may alternatively determine, based on the status of the (radio) channel between the access network device and the terminal device, the DMRS pattern corresponding to the antenna port. The status of the radio channel includes a large-scale feature (for example, a path loss) and a small-scale feature (for example, a multipath delay or a Doppler shift) of the channel. When quality of the radio channel is relatively good, the access network device may determine that a DMRS pattern with low DMRS density (in other words, a DMRS corresponding to an antenna port occupies a relatively small quantity of resources) is the DMRS pattern corresponding to the antenna port, to save time-frequency resources. When quality of the radio channel is relatively poor, the access network device may determine that a DMRS pattern with high DMRS density is the DMRS pattern corresponding to the antenna port, to improve an effect of channel estimation or channel measurement.

120. The access network device sends first indication information to a terminal device, where the first indication information indicates the DMRS pattern corresponding to the antenna port.

130. The terminal device determines the DMRS pattern that is corresponding to the antenna port and that is indicated by the first indication information.

Optionally, in addition to the DMRS pattern corresponding to the antenna port, the first indication information may further indicate the antenna port. Specifically, the first indication information includes a first identifier, and the first identifier is a joint identifier of the antenna port and the DMRS pattern. In this way, after receiving the first indication information, the terminal device may determine the DMRS pattern that corresponds to the antenna port identified by the first identifier. Specifically, the first identifier may identify a DMRS pattern 1 corresponding to an antenna port 1. In addition, when the first identifier is used to identify the antenna port, the first identifier may specifically identify a port number of the antenna port, or may identify other attribute information of the antenna port.

It should be understood that a joint identifier may mean that one identifier corresponds to a plurality of types of information, and therefore an indication of the plurality of types of information can be implemented by using one identifier.

Optionally, the first indication information may alternatively include two different identifiers, and the two different identifiers are respectively used to identify the antenna port and the DMRS pattern. Specifically, the first indication information may include a second identifier and a third identifier, the second identifier is a port number of the antenna port, and the third identifier is an identifier of the DMRS pattern. After receiving the first indication information, the terminal device may determine the port number of the antenna port identified by the second identifier and the DMRS pattern identified by the third identifier.

Optionally, the first indication information may alternatively be used to specifically indicate an index of the DMRS pattern corresponding to the antenna port in a plurality of DMRS patterns.

Specifically, the access network device and the terminal device may prestore the plurality of DMRS patterns. For example, the access network device and the terminal device each store DMRS patterns 1 to 5 (corresponding index numbers are respectively 1 to 5), and if an index number indicated by the first indication information is 3, the terminal device determines that a DMRS pattern 3 is the DMRS pattern corresponding to the antenna port. Then the terminal device may determine, based on the DMRS pattern 3, the time-frequency resource used by the access network device to transmit the DMRS, and receive, on the determined time-frequency resource, the DMRS sent by the access network device.

Optionally, there may be a specific correspondence between a sequence number of an antenna port and a DMRS pattern, so that a DMRS pattern corresponding to a corresponding antenna port may be determined based on the correspondence between the sequence number of the antenna port and the DMRS pattern.

For example, the correspondence between the sequence number of the antenna port and the DMRS pattern may be shown as Table 1, and a field value in Table 1 is short for a field value carried in sequence number information of the antenna port. The access network device and the terminal device each may prestore the information shown in Table 1. In this way, the access network device may send the sequence number of the antenna port to the terminal device as indication information, and the terminal device may determine the DMRS pattern corresponding to the corresponding antenna port, based on the correspondence in Table 1 between the sequence number of the antenna port and the DMRS pattern.

**Table 1**

| Field value | Antenna port sequence number | DMRS pattern index |
|---|---|---|
| 0 | #8 | 1 |
| 1 | #8 | 2 |
| 2 | #9 | 2 |
| 3 | #8 | 3 |
| 4 | #9 | 3 |
| 5 | #10 | 3 |
| 6 | #8 | 4 |
| 7 | #9 | 4 |
| 8 | #10 | 4 |
| 9 | #11 | 4 |
| 10 | #8 | 5 |
| 11 | #9 | 5 |
| 12 | #10 | 5 |
| 13 | #11 | 5 |
| 14 | #12 | 5 |
| 15 | #13 | 5 |
| 16 | #14 | 5 |
| 17 | #15 | 5 |
| 18 | #9, #8 | 2 |
| 19 | #8, #9 | 3 |
| 20 | #8, #9 | 4 |
| 21 | #10, #11 | 4 |
| 22 | #8, #12 | 5 |
| 23 | #9, #13 | 5 |
| 24 | #10, #14 | 5 |
| 25 | #11, #15 | 5 |

In addition, it can be learned from Table 1 that an antenna port #8 may correspond to a plurality of DMRS patterns. For example, the antenna port #8 may correspond to any one of DMRS patterns whose index numbers are respectively 1, 2, 3, 4, and 5. Each DMRS pattern may correspond to a plurality of antenna ports. For example, a DMRS pattern whose index number is 2 may be used for transmitting a DMRS through the antenna port #8, or may be used for transmitting a DMRS through an antenna port #9, or may be used for simultaneously transmitting DMRSs through an antenna port #8 and an antenna port #9.

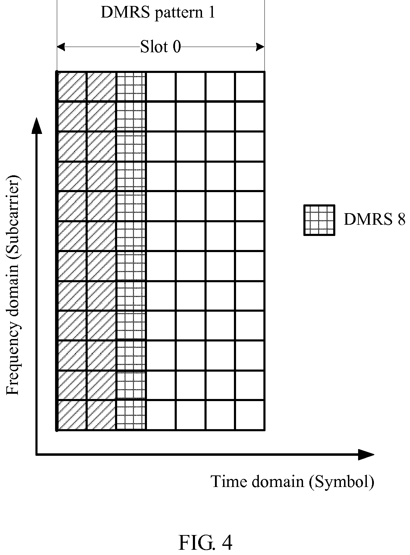

It should be understood that the DMRS patterns whose index numbers are respectively 1 to 5 in Table 1 may respectively correspond to DMRS patterns 1 to 5 in FIG 4 to FIG 8, but this embodiment of this application is not limited thereto, and the DMRS patterns whose index numbers are respectively 1 to 5 in Table 1 may correspond to other types of DMRS patterns.

It should be further understood that Table 1 is merely a specific form of the correspondence between the sequence number information of the antenna port and the DMRS pattern. This embodiment of this application is not limited thereto, and the correspondence between the sequence number information of the antenna port and the DMRS pattern may be in another form. Alternatively, in addition to explicitly indicating, by using the first indication information, the index of the DMRS pattern corresponding to the antenna port in the plurality of DMRS patterns, the access network device may indirectly indicate, by using other indication information, the DMRS pattern corresponding to the antenna port.

For example, the access network device may send indication information to the terminal device, where the indication information is used to indicate the quantity of spatial layers of the to-be-transmitted data. In this way, the terminal device may determine the DMRS pattern corresponding to the antenna port, based on the quantity of spatial layers of the to-be-transmitted data and correspondences between quantities of spatial layers and a plurality of DMRS patterns. Alternatively, the access network device may notify, by using the indication information, the terminal device of the quantity of antenna ports corresponding to the to-be-transmitted data, so that the terminal device can determine the target DMRS pattern based on the quantity of antenna ports of the to-be-transmitted data and correspondences between quantities of antenna ports and a plurality of DMRS patterns.

140. The access network device sends a DMRS to the terminal device through the antenna port on a resource corresponding to the DMRS pattern.

150. The terminal device receives, through the antenna port on the resource corresponding to the DMRS pattern, the DMRS sent by the access network device.

In this embodiment of this application, the access network device may flexibly determine the DMRS pattern corresponding to the antenna port, and notify the terminal device of the DMRS pattern by using indication information. Compared with a manner of using only one fixed DMRS pattern in the prior art, resources for transmitting a DMRS can be more flexibly allocated in this embodiment.

Further, when channel quality is relatively poor, the access network device may determine that a DMRS pattern corresponding to a relatively large quantity of time-frequency resources is the DMRS pattern corresponding to the antenna port, and can transmit the DMRS on more resources, thereby improving an effect of channel estimation by the terminal device based on the DMRS. When channel quality is relatively good, the access network device may determine that a DMRS pattern corresponding to a relatively small quantity of time-frequency resources is the DMRS pattern corresponding to the antenna port, to save time-frequency resources.

Optionally, the access network device may send second indication information to the terminal device, where the second indication information is used to indicate whether transmit power of the DMRS is increased, or indicate an increased amount of transmit power of the DMRS. After receiving the second indication information sent by the access network device, the terminal device can determine, based on the second indication information, whether the transmit power of the DMRS is increased, or determine the increased amount of the transmit power of the DMRS based on the second indication information.

Specifically, the access network device and the terminal device may have an agreement that the transmit power of the DMRS of the access network device is first power. When the terminal device determines, by using the second indication information, that the transmit power of the DMRS is not adjusted, the terminal device may receive the DMRS at the first power.

When the terminal device determines, by using the second indication information, that the transmit power of the DMRS of the access network is increased, the terminal device may obtain second power by adding a preset first increased amount to the first power (the first increased amount may be pre-agreed on by the terminal device and the access network device), and then receive the DMRS at the second power.

When the terminal directly determines, by using the second indication information, that the increased amount of the transmit power of the DMRS is a second increased amount, the terminal may obtain third power by directly adding the second increased amount to the first power, and then receive the DMRS at the third power.

In some cases, for example, when channel quality is poor, the access network device may increase the transmit power of the DMRS, to improve precision of the channel estimation by the terminal device.

Specifically, a field in the second indication information may be used to indicate whether the transmit power of the DMRS is increased. As shown in Table 2, when a value of the field in the second indication information is 0, it indicates that the transmit power of the DMRS is not increased; or when a value of the field in the second indication information is 1, it indicates that the transmit power of the DMRS is increased. After the terminal device learns, by using the second indication information, that the transmit power of the DMRS is increased, the terminal device obtains a new DMRS power value by adding a preset power value to an original DMRS power value (the preset power value may be pre-agreed on by the access network device and the terminal device), and receives the DMRS based on the new DMRS power value.

**Table 2**

| Field value | Power increased or not |
|---|---|
| 0 | No |
| 1 | Yes |

Alternatively, a field in the second indication information may be used to indicate the increased amount of the transmit power of the DMRS, and different field values indicate different power increased amounts. As shown in Table 3, when a value of the field in the second indication information is 0, it indicates that the increased amount of the transmit power of the DMRS is 0 dB; or when a value of the field in the second indication information is 1, it indicates that the increased amount of the transmit power of the DMRS is 3 dB.

It should be understood that Table 3 merely shows a specific situation of the second indication information. Actually, when indicating the increased amount of the transmit power of the DMRS, the second indication information may further indicate the increased amount of the transmit power of the DMRS in a more detailed manner by using a field value with a plurality of bits.

**Table 3**

| Field value | Power increased amount |
|---|---|
| 0 | 0 dB |
| 1 | 3 dB |

It should be understood that the second indication information is described above only by using Table 2 and Table 3, and this embodiment of this application is not limited thereto. The second indication information may also be indicated in another form.

In addition, the antenna port in this embodiment of this application may be understood as a logical port for transmission and has no one-to-one correspondence with a physical antenna, and the antenna port may be defined by using a pilot signal (for example, a DMRS) used for the antenna port.

It should be understood that there are a plurality of manners in which the access network device determines the DMRS pattern corresponding to the antenna port, based on the quantity of spatial layers and the first correspondence between the quantity of spatial layers and the DMRS pattern. The following describes, in detail by using FIG 4 to FIG 8 as examples, how to determine the DMRS pattern corresponding to the antenna port, based on the quantity of spatial layers and the first correspondence between the quantity of spatial layers and the DMRS pattern.

It should be understood that FIG 4 to FIG 8 show that the access network device corresponds to five DMRS patterns. Actually, a total quantity of DMRS patterns corresponding to the access network device may be another value, and this is not limited in this embodiment of this application.

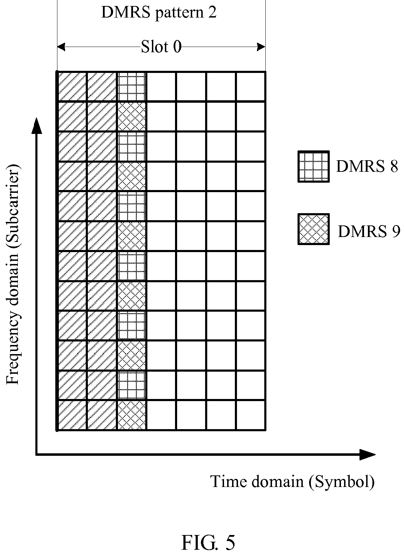

When the access network device determines that there is one spatial layer of the to-be-transmitted data in total, and that an antenna port corresponding to the to-be-transmitted data is port 8 (the port 8 is used as an example herein, and actually, the antenna port corresponding to the to-be-transmitted data may also be another port), the access network device may determine that a DMRS pattern 1 (in which the port 8 corresponds to all subcarriers on one OFDM symbol) shown in FIG 4 is a DMRS pattern corresponding to the antenna port #8. When the access network device determines that there are two spatial layers of the to-be-transmitted data in total, and that antenna ports corresponding to the to-be-transmitted data are ports 8 and 9 (the ports 8 and 9 are used as an example herein, and actually, the antenna ports corresponding to the to-be-transmitted data may also be two other ports), the access network device may determine that a DMRS pattern 2 shown in FIG 5 is a target DMRS pattern corresponding to the antenna ports 8 and 9.

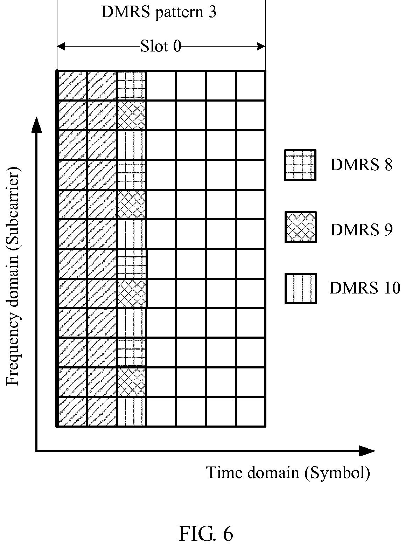

When the access network device determines that there are three spatial layers of the to-be-transmitted data in total, and that antenna ports corresponding to the to-be-transmitted data are ports 8 to 10 (the ports 8 to 10 are used as an example herein, and actually, the antenna ports corresponding to the to-be-transmitted data may also be three other ports), the access network device may determine that a DMRS pattern 3 shown in FIG 6 is a DMRS pattern corresponding to the antenna ports 8 to 10.

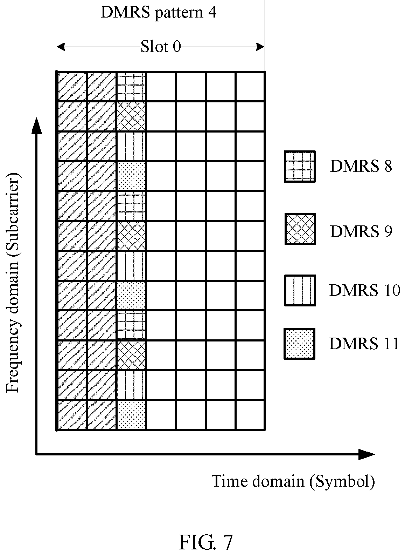

When the access network device determines that there are four spatial layers of the to-be-transmitted data in total, and that antenna ports corresponding to the to-be-transmitted data are ports 8 to 11 (the ports 8 to 11 are used as an example herein, and actually, the antenna ports corresponding to the to-be-transmitted data may also be four other ports), the access network device may determine that a DMRS pattern 4 shown in FIG 7 is a DMRS pattern corresponding to the antenna ports 8 to 11.

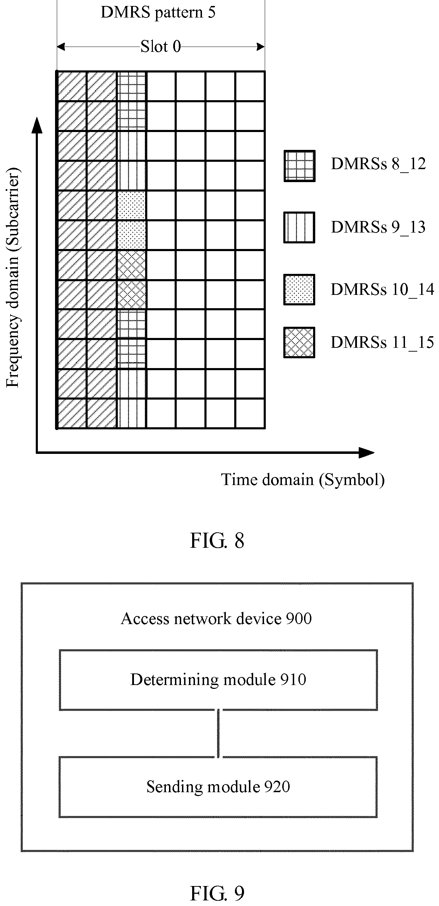

When the access network device determines that there are five spatial layers of the to-be-transmitted data in total, and that antenna ports corresponding to the to-be-transmitted data are ports 8 to 12, the access network device may determine that a DMRS pattern 5 shown in FIG 8 is a DMRS pattern corresponding to the antenna ports 8 to 12. Specifically, the DMRS pattern 5 indicates that DMRSs corresponding to the ports 8 and 12 are transmitted on a same time-frequency resource, DMRSs corresponding to ports 9 and 13 are transmitted on a same time-frequency resource, DMRSs corresponding to ports 10 and 14 are transmitted on a same time-frequency resource, and DMRSs corresponding to ports 11 and 15 are transmitted on a same time-frequency resource. However, because the antenna ports corresponding to the to-be-transmitted data are the ports 8 to 12, during actual DMRS transmission, REs corresponding to DMRSs 9_13, DMRSs 10_14, and DMRSs 11_15 are respectively used to transmit only DMRSs corresponding to ports 9 to 11, but not used to transmit DMRSs corresponding to ports 13 to 15.

When the access network device determines that there are six, seven, or eight spatial layers of the to-be-transmitted data in total, and that antenna ports corresponding to the to-be-transmitted data are ports 8 to 13, ports 8 to 14, or ports 8 to 15, the access network device may also determine that the DMRS pattern 5 shown in FIG 8 is a DMRS pattern corresponding to the corresponding ports.

Optionally, in an embodiment, the access network may alternatively determine the DMRS pattern corresponding to the antenna port, based on the quantity of antenna ports and a second correspondence between the quantity of antenna ports and the DMRS pattern. There may be a plurality of correspondences between the quantity of antenna ports and the DMRS pattern, and the second correspondence may be one of the plurality of correspondences.

It should be understood that the terminal device may determine, in a manner similar to that used by the access network device, the DMRS pattern corresponding to the antenna port. Specifically, the terminal device may determine the DMRS pattern corresponding to the antenna port, based on the quantity of antenna ports and the second correspondence between the quantity of antenna ports and the DMRS pattern. The terminal device may determine the quantity of antenna ports by receiving fourth indication information sent by the network device (the fourth indication information indicates a quantity of antenna ports), or may determine the quantity of antenna ports by using prestored information.

When the DMRS pattern corresponding to the antenna port is determined based on the quantity of antenna ports corresponding to the to-be-transmitted data and the correspondence between the quantity of antenna ports and the DMRS pattern, a manner similar to that of determining, based on the quantity of spatial layers of the to-be-transmitted data, the DMRS pattern corresponding to the antenna port may be used.

Specifically, when there is one antenna port (for example, the antenna port #8) corresponding to the to-be-transmitted data, the access network device determines that the DMRS pattern 1 shown in FIG 4 is the DMRS pattern corresponding to the antenna port #8.

When there are two antenna ports (for example, the antenna ports 8 and 9) corresponding to the to-be-transmitted data, the access network device determines that the DMRS pattern 2 shown in FIG 5 is the DMRS pattern corresponding to the antenna ports 8 and 9.

When there are three antenna ports (for example, the antenna ports 8 to 10) corresponding to the to-be-transmitted data, the access network device determines that the DMRS pattern 3 shown in FIG 6 is the DMRS pattern corresponding to the antenna ports 8 to 10.

When there are four antenna ports (for example, the antenna ports 8 to 11) corresponding to the to-be-transmitted data, the access network device determines that the DMRS pattern 4 shown in FIG 7 is the DMRS pattern corresponding to the antenna ports 8 to 11.

When there are five, six, seven, or eight antenna ports (for example, the antenna ports 8 to 12, the antenna ports 8 to 13, the antenna ports 8 to 14, or the antenna ports 8 to 15) corresponding to the to-be-transmitted data, the access network device determines that the DMRS pattern 5 shown in FIG 8 is the DMRS pattern corresponding to the corresponding antenna ports (the antenna ports 8 to 12, the antenna ports 8 to 13, the antenna ports 8 to 14, or the antenna ports 8 to 15).

The foregoing describes the reference signal sending and receiving method according to the embodiments of this application in detail with reference to FIG 1 to FIG 8. The following describes an access network device and a terminal device according to the embodiments of this application in detail with reference to FIG 9 to FIG 12. It should be understood that the access network device and the terminal device in FIG 9 to FIG 12 can perform the reference signal sending and receiving method described in FIG 1 to FIG 8 according to the embodiments of this application. Repeated descriptions are appropriately omitted to avoid repetition.

FIG 9 is a schematic block diagram of an access network device 900 according to an embodiment of this application. The access network device 900 includes:
a determining module 910, configured to determine a demodulation reference signal DMRS pattern corresponding to an antenna port; and
a sending module 920, configured to send first indication information to a terminal device, where the first indication information indicates the DMRS pattern corresponding to the antenna port.

The sending module 920 is further configured to send a DMRS to the terminal device through the antenna port on a resource corresponding to the DMRS pattern.

In this embodiment of this application, the access network device may flexibly determine the DMRS pattern corresponding to the antenna port, and notify the terminal device of the DMRS pattern by using indication information. Compared with a manner of using only one fixed DMRS pattern in the prior art, resources for transmitting a DMRS can be more flexibly allocated in this embodiment.

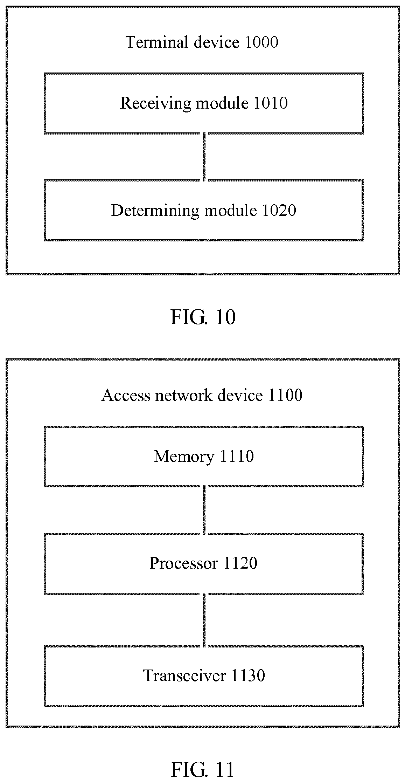

It should be understood that the determining module 910 may be specifically implemented by a processor 1120 in FIG 11, and the sending module 920 may be implemented by a transceiver 1130 in FIG 11.

FIG 10 is a schematic block diagram of a terminal device 1000 according to an embodiment of this application. The terminal device 1000 includes:
a receiving module 1010, configured to receive first indication information from an access network device, where the first indication information indicates a demodulation reference signal DMRS pattern corresponding to an antenna port; and
a determining module 1020, configured to determine the DMRS pattern that corresponds to the antenna port and that is indicated by the first indication information.

The receiving module 1010 is further configured to receive a DMRS on a resource corresponding to the DMRS pattern.

In this embodiment of this application, the access network device may flexibly determine the DMRS pattern corresponding to the antenna port, and notify the terminal device of the DMRS pattern by using indication information. Compared with a manner of using only one fixed DMRS pattern in the prior art, resources for transmitting a DMRS can be more flexibly allocated in this embodiment.

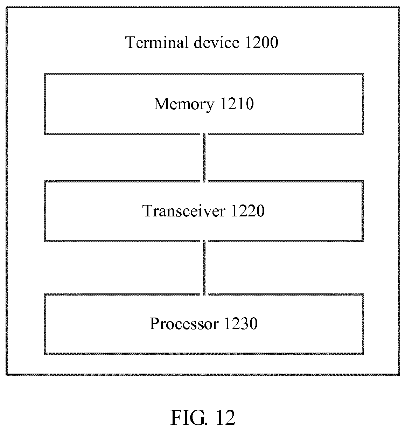

It should be understood that the receiving module 1010 may be specifically implemented by a transceiver 1220 in FIG 12, and the determining module 1020 may be specifically implemented by a processor 1230 in FIG 12.

FIG 11 is a schematic block diagram of an access network device 1100 according to an embodiment of this application. The access network device 1100 includes a memory 1110, a processor 1120, and a transceiver 1130. Optionally, the memory 1110, the processor 1120, and the transceiver 1130 may be connected by using a bus system, or may be connected in another manner.

The memory 1110 may be configured to store an instruction.

The processor 1120 is configured to execute the instruction stored in the memory 1110, and when the instruction is executed, the processor 1120 is specifically configured to determine a demodulation reference signal DMRS pattern corresponding to an antenna port.

The transceiver 1130 is configured to send first indication information to a terminal device, where the first indication information indicates the DMRS pattern corresponding to the antenna port.

The transceiver 1130 is further configured to send a DMRS to the terminal device through the antenna port on a resource corresponding to the DMRS pattern.

In this embodiment of this application, the access network device may flexibly determine the DMRS pattern corresponding to the antenna port, and notify the terminal device of the DMRS pattern by using indication information. Compared with a manner of using only one fixed DMRS pattern in the prior art, resources for transmitting a DMRS can be more flexibly allocated in this embodiment.

Optionally, in an embodiment, the first indication information includes a first identifier, and the first identifier is a joint identifier of the antenna port and the DMRS pattern.

Optionally, in an embodiment, the first indication information includes a second identifier and a third identifier, the second identifier is a port number of the antenna port, and the third identifier is an identifier of the DMRS pattern.

Optionally, in an embodiment, the transceiver 1130 is configured to send second indication information to the terminal device, where the second information indicates whether transmit power of the DMRS is increased, or indicates an increased amount of transmit power of the DMRS.

Optionally, in an embodiment, the processor 1120 is configured to determine the DMRS pattern corresponding to the antenna port, based on at least one of a quantity of spatial layers of to-be-transmitted data, a quantity of antenna ports corresponding to the to-be-transmitted data, and a status of a channel between the access network device and the terminal device.

Optionally, in an embodiment, the processor 1120 is specifically configured to determine the DMRS pattern corresponding to the antenna port, based on the quantity of spatial layers and a first correspondence, where the first correspondence is a correspondence between the quantity of spatial layers and the DMRS pattern.

Optionally, in an embodiment, the processor 1120 is specifically configured to determine the DMRS pattern based on the quantity of antenna ports and a second correspondence, where the second correspondence is a correspondence between the quantity of antenna ports and the DMRS pattern.

FIG 12 is a schematic block diagram of a terminal device according to an embodiment of this application. The terminal device 1200 includes a memory 1210, a transceiver 1220, and a processor 1230. Optionally, the memory 1210, the transceiver 1220, and the processor 1230 may be connected by using a bus system, or may be connected in another manner.

The memory 1210 may be configured to store an instruction.

The transceiver 1220 is configured to receive first indication information from an access network device, where the first indication information indicates a demodulation reference signal DMRS pattern corresponding to the antenna port.

The processor 1230 is configured to execute the instruction stored in the memory 1210, and when the instruction is executed, the processor 1230 is specifically configured to determine the DMRS pattern indicated by the first indication information.

The transceiver 1220 is further configured to receive a DMRS on a resource corresponding to the DMRS pattern.

In this embodiment of this application, the access network device may flexibly determine the DMRS pattern corresponding to the antenna port, and notify the terminal device of the DMRS pattern by using indication information. Compared with a manner of using only one fixed DMRS pattern in the prior art, resources for transmitting a DMRS can be more flexibly allocated in this embodiment.

Optionally, in an embodiment, the first indication information includes a first identifier, and the first identifier is a joint identifier of the antenna port and the DMRS pattern.

The processor 1230 is configured to determine the DMRS pattern that corresponds to the antenna port identified by the first identifier.

Optionally, in an embodiment, the first indication information includes a second identifier and a third identifier, the second identifier is a port number of the antenna port, and the third identifier is an identifier of the DMRS pattern.

The processor 1230 is configured to determine the port number of the antenna port identified by the second identifier and the DMRS pattern identified by the third identifier.

Optionally, in an embodiment, the transceiver 1220 is configured to receive second indication information from the access network device, where the second indication information indicates whether transmit power of the DMRS is increased, or indicates an increased amount of transmit power of the DMRS.

Optionally, in an embodiment, the transceiver 1220 is configured to receive third indication information from the access network device, where the third indication information indicates a quantity of spatial layers of to-be-transmitted data; and the processor 1230 is configured to determine the DMRS pattern corresponding to the antenna port, based on the quantity of spatial layers of the to-be-transmitted data and a first correspondence, where the first correspondence is a correspondence between the quantity of spatial layers and the DMRS pattern.

Optionally, in an embodiment, the transceiver 1220 is configured to receive fourth indication information from the access network device, where the fourth indication information indicates a quantity of antenna ports; and the processor 1230 is configured to determine the DMRS pattern based on the quantity of antenna ports and a second correspondence, where the second correspondence is a correspondence between the quantity of antenna ports and the DMRS pattern.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A reference signal sending method implemented by an access network device (110), **characterized by** comprising:
determining (110) a demodulation reference signal, DMRS, pattern corresponding to an antenna port based on a quantity of spatial layers of to-be-transmitted data and a status of a radio channel between the access network device (110) and a terminal device (120);
sending (120) first indication information to the terminal device (120), wherein the first indication information comprises a first identifier and indicates the DMRS pattern corresponding to the antenna port, wherein the first identifier is a joint identifier of the antenna port and the DMRS pattern; and
sending (140) a DMRS to the terminal device (120) through the antenna port on a resource corresponding to the DMRS pattern.

2. The method according to claim 1, wherein the determining (119) a DMRS pattern corresponding to the antenna port comprises:
when a quality of the radio channel is relatively good, the access network device (110) determines that a DMRS pattern with low DMRS density is the DMRS pattern corresponding to the antenna port, so as to save time-frequency resources; and
when the quality of the radio channel is relatively poor, the access network device (110) determines that a DMRS pattern with high DMRS density is the DMRS pattern corresponding to the antenna port, so as to improve an effect of channel estimation or channel measurement.

3. The method according to claim 1 or 2, wherein the status of the radio channel includes a large-scale feature, including a path loss, and a small-scale feature, including a multipath delay or a Doppler shift, of the radio channel.

4. The method according to any one of claims 1 to 3, wherein the method further comprises:
sending second indication information to the terminal device (120), wherein the second information indicates whether transmit power of the DMRS is increased, or indicates an increased amount of transmit power of the DMRS.

5. The method according to any one of claims 1 to 4, wherein the access network device (110) prestores a plurality of DMRS patterns, and a total quantity of prestored DMRS patterns is less than or equal to a maximum quantity of to-be-transmitted spatial layers supported by the access network device (110).

6. The method according to any one of claims 1 to 5, wherein the determining (110) a DMRS pattern corresponding to the antenna port comprises:
determining the DMRS pattern corresponding to the antenna port, based on the quantity of spatial layers of the to-be-transmitted data and a first correspondence, wherein the first correspondence is a correspondence between the quantity of spatial layers and the DMRS pattern.

7. A reference signal sending method implemented by a wireless communications system (100) comprising a terminal device (120) and an access network device (110), said method comprising the access network device (110) performing the method according to any one of claims 1 to 6, the method further comprising:
receiving (120), by the terminal device (120), the first indication information from the access network device (110) ;
determining (130), by the terminal device (120), the DMRS pattern that corresponds to the antenna port and that is indicated by the first indication information, comprising determining the DMRS pattern that corresponds to the antenna port identified by the first identifier; and
receiving (150), by the terminal device (120), the DMRS on the resource corresponding to the DMRS pattern.

8. The method according to claim 7, wherein the method further comprises:
receiving, by the terminal device (120), second indication information from the access network device (110), wherein the second indication information indicates whether transmit power of the DMRS is increased, or indicates an increased amount of transmit power of the DMRS.

9. An access network device (1100), comprising a processor (1120) and a memory (1110) coupled to the processor (1120), wherein the memory (1110) is storing a program, the processor (1120) is configured to execute the program, and when the program is executed, the processor (1120) is configured to implement the method according to any one of claims 1 to 6.

10. A wireless communications system (100), comprising the access network device (1100) of claim 9 and a terminal device (1200), the terminal device (1200) comprising a processor (1230) and a memory (1210) coupled to the processor (1230), wherein the memory (1210) of the terminal device (1200) is storing a program, the processor (1230) of the terminal device (1200) is configured to execute the program, and when the program is executed, the processor (1230) of the terminal device (1200) is configured to implement the method steps performed by the terminal device (120) according to any one of claims 7 or 8.

11. A computer readable storage medium, comprising instructions, wherein when the instructions are run on a processor of the access network device (1100) of claim 9 cause the access network device (1100) to perform the method according to any one of claims 1 to 6.

## Patentansprüche

1. Verfahren zum Senden eines Referenzsignals, das durch eine Zugangsnetzwerkvorrichtung (110) implementiert wird, **dadurch gekennzeichnet, dass** es umfasst:
Bestimmen (110) eines Demodulationsreferenzsignalmusters, DMRS-Muster, das einem Antennenanschluss entspricht, basierend auf einer Anzahl von räumlichen Schichten zu übertragender Daten und einem Status eines Funkkanals zwischen der Zugangsnetzwerkvorrichtung (110) und einem Endgerät (120);
Senden (120) von ersten Anzeigeinformationen an das Endgerät (120), wobei die ersten Anzeigeinformationen eine erste Kennung umfassen und das DMRS-Muster, das dem Antennenanschluss entspricht, anzeigen, wobei die erste Kennung eine gemeinsame Kennung des Antennenanschlusses und des DMRS-Musters ist; und
Senden (140) eines DMRS an das Endgerät (120) über den Antennenanschluss auf einer Ressource, die dem DMRS-Muster entspricht.

2. Verfahren nach Anspruch 1, wobei das Bestimmen (119) eines DMRS-Musters, das dem Antennenanschluss entspricht, umfasst:
wenn eine Qualität des Funkkanals relativ gut ist, bestimmt die Zugangsnetzwerkvorrichtung (110), dass ein DMRS-Muster mit niedriger DMRS-Dichte das DMRS-Muster, das dem Antennenanschluss entspricht, ist, um so Zeitfrequenzressourcen zu sparen; und
wenn die Qualität des Funkkanals relativ schlecht ist, bestimmt die Zugangsnetzwerkvorrichtung (110), dass ein DMRS-Muster mit hoher DMRS-Dichte das DMRS-Muster, das dem Antennenanschluss entspricht, ist, um so einen Effekt einer Kanalschätzung oder einer Kanalmessung zu verbessern.

3. Verfahren nach Anspruch 1 oder 2, wobei der Status des Funkkanals ein großmaßstäbiges Merkmal, einschließlich eines Pfadverlusts, und ein kleinmaßstäbiges Merkmal, einschließlich einer Mehrwegeverzögerung oder einer Doppler-Verschiebung, des Funkkanals umfasst.

4. Verfahren nach einem der Ansprüche 1 bis 3, wobei das Verfahren ferner umfasst:
Senden zweiter Anzeigeinformationen an das Endgerät (120), wobei die zweiten Informationen anzeigen, ob eine Übertragungsleistung des DMRS erhöht ist, oder eine erhöhte Menge an Übertragungsleistung des DMRS anzeigen.

5. Verfahren nach einem der Ansprüche 1 bis 4, wobei die Zugangsnetzwerkvorrichtung (110) eine Vielzahl von DMRS-Mustern vorab speichert und eine Gesamtanzahl vorab gespeicherter DMRS-Muster kleiner als oder gleich einer maximalen Anzahl von zu übertragenden räumlichen Schichten, die durch die Zugangsnetzwerkvorrichtung (110) unterstützt werden, ist.

6. Verfahren nach einem der Ansprüche 1 bis 5, wobei das Bestimmen (110) eines DMRS-Musters, das dem Antennenanschluss entspricht, umfasst:
Bestimmen des DMRS-Musters, das dem Antennenanschluss entspricht, basierend auf der Anzahl von räumlichen Schichten der zu übertragenden Daten und einer ersten Entsprechung, wobei die erste Entsprechung eine Entsprechung zwischen der Anzahl von räumlichen Schichten und dem DMRS-Muster ist.

7. Verfahren zum Senden des Referenzsignals, das durch ein Drahtloskommunikationssystem (100), das ein Endgerät (120) und eine Zugangsnetzwerkvorrichtung (110) umfasst, implementiert wird, wobei das Verfahren umfasst, dass die Zugangsnetzwerkvorrichtung (110) das Verfahren nach einem der Ansprüche 1 bis 6 durchführt, wobei das Verfahren ferner umfasst:
Empfangen (120), durch das Endgerät (120), der ersten Anzeigeinformationen von der Zugangsnetzwerkvorrichtung (110);
Bestimmen (130), durch das Endgerät (120), des DMRS-Musters, das dem Antennenanschluss entspricht und das durch die ersten Anzeigeinformationen angezeigt wird, das das Bestimmen des DMRS-Musters umfasst, das dem Antennenanschluss, der durch die erste Kennung identifiziert wird, entspricht; und
Empfangen (150), durch das Endgerät (120), des DMRS auf der Ressource, die dem DMRS-Muster entspricht.

8. Verfahren nach Anspruch 7, wobei das Verfahren ferner umfasst:
Empfangen, durch das Endgerät (120), von zweiten Anzeigeinformationen von der Zugangsnetzwerkvorrichtung (110), wobei die zweiten Anzeigeinformationen anzeigen, ob die Übertragungsleistung des DMRS erhöht ist, oder eine erhöhte Menge an Übertragungsleistung des DMRS anzeigen.

9. Zugangsnetzwerkvorrichtung (1100), die einen Prozessor (1120) und einen Speicher (1110), der mit dem Prozessor (1120) gekoppelt ist, umfasst, wobei der Speicher (1110) ein Programm speichert, der Prozessor (1120) konfiguriert ist, um das Programm auszuführen, und wenn das Programm ausgeführt wird, der Prozessor (1120) konfiguriert ist, um das Verfahren nach einem der Ansprüche 1 bis 6 zu implementieren.

10. Drahtloskommunikationssystem (100), das die Zugangsnetzwerkvorrichtung (1100) nach Anspruch 9 und ein Endgerät (1200) umfasst, wobei das Endgerät (1200) einen Prozessor (1230) und einen Speicher (1210), der mit dem Prozessor (1230) gekoppelt ist, umfasst, wobei der Speicher (1210) des Endgeräts (1200) ein Programm speichert, der Prozessor (1230) des Endgeräts (1200) konfiguriert ist, um das Programm auszuführen, und wenn das Programm ausgeführt wird, der Prozessor (1230) des Endgeräts (1200) konfiguriert ist, um die Verfahrensschritte, die durch das Endgerät (120) nach einem der Ansprüche 7 oder 8 durchgeführt werden, zu implementieren.

11. Computerlesbares Speichermedium, das Anweisungen umfasst, wobei, wenn die Anweisungen auf einem Prozessor der Zugangsnetzwerkvorrichtung (1100) nach Anspruch 9 ausgeführt werden, die Zugangsnetzwerkvorrichtung (1100) veranlasst wird, das Verfahren nach einem der Ansprüche 1 bis 6 durchzuführen.

## Revendications

1. Procédé d'envoi de signal de référence mis en oeuvre par un dispositif de réseau d'accès (110), **caractérisé en ce qu'**il comprend :
la détermination (110) d'un modèle de signal de référence de démodulation, DMRS, correspondant à un port d'antenne sur la base d'une quantité de couches spatiales de données à transmettre et d'un état d'un canal radio entre le dispositif de réseau d'accès (110) et un dispositif terminal (120) ;
l'envoi (120) de premières informations d'indication au dispositif terminal (120), dans lequel les premières informations d'indication comprennent un premier identifiant et indiquent le modèle DMRS correspondant au port d'antenne, dans lequel le premier identifiant est un identifiant conjoint du port d'antenne et du modèle DMRS ; et
l'envoi (140) d'un DMRS au dispositif terminal (120) par l'intermédiaire du port d'antenne sur une ressource correspondant au modèle DMRS.

2. Procédé selon la revendication 1, dans lequel la détermination (119) d'un modèle DMRS correspondant au port d'antenne comprend :
lorsqu'une qualité du canal radio est relativement bonne, le dispositif de réseau d'accès (110) détermine qu'un modèle DMRS à faible densité DMRS est le modèle DMRS correspondant au port d'antenne, de manière à économiser des ressources temps-fréquence ; et
lorsque la qualité du canal radio est relativement médiocre, le dispositif de réseau d'accès (110) détermine qu'un modèle DMRS à forte densité DMRS est le modèle DMRS correspondant au port d'antenne, de manière à améliorer un effet d'estimation de canal ou de mesure de canal.

3. Procédé selon la revendication 1 ou 2, dans lequel l'état du canal radio comporte une caractéristique à grande échelle, y compris une perte de trajet, et une caractéristique à petite échelle, y compris un retard par trajets multiples ou un décalage Doppler, du canal radio.

4. Procédé selon l'une quelconque des revendications 1 à 3, dans lequel le procédé comprend en outre :
l'envoi de secondes informations d'indication au dispositif terminal (120), dans lequel les secondes informations indiquent si la puissance d'émission du DMRS est augmentée, ou indiquent une quantité accrue de puissance d'émission du DMRS.

5. Procédé selon l'une quelconque des revendications 1 à 4, dans lequel le dispositif de réseau d'accès (110) préstocke une pluralité de modèles DMRS, et une quantité totale de modèles DMRS préstockés est inférieure ou égale à une quantité maximale de couches spatiales à transmettre prises en charge par le dispositif de réseau d'accès (110).

6. Procédé selon l'une quelconque des revendications 1 à 5, dans lequel la détermination (110) d'un modèle DMRS correspondant au port d'antenne comprend :
la détermination du modèle DMRS correspondant au port d'antenne, sur la base de la quantité de couches spatiales des données à transmettre et d'une première correspondance, dans lequel la première correspondance est une correspondance entre la quantité de couches spatiales et le modèle DMRS.

7. Procédé d'envoi de signal de référence mis en oeuvre par un système de communication sans fil (100) comprenant un dispositif terminal (120) et un dispositif de réseau d'accès (110), ledit procédé comprenant le dispositif de réseau d'accès (110) effectuant le procédé selon l'une quelconque des revendications 1 à 6, le procédé comprenant en outre :
la réception (120), par le dispositif terminal (120), des premières informations d'indication à partir du dispositif de réseau d'accès (110) ;
la détermination (130), par le dispositif terminal (120), du modèle DMRS qui correspond au port d'antenne et qui est indiqué par les premières informations d'indication, comprenant la détermination du modèle DMRS qui correspond au port d'antenne identifié par le premier identifiant ; et
la réception (150), par le dispositif terminal (120), du DMRS sur la ressource correspondant au modèle DMRS.

8. Procédé selon la revendication 7, dans lequel le procédé comprend en outre :
la réception, par le dispositif terminal (120), de secondes informations d'indication à partir du dispositif de réseau d'accès (110), dans lequel les secondes informations d'indication indiquent si la puissance d'émission du DMRS est augmentée, ou indiquent une quantité accrue de puissance d'émission du DMRS.

9. Dispositif de réseau d'accès (1100), comprenant un processeur (1120) et une mémoire (1110) couplée au processeur (1120), dans lequel la mémoire (1110) stocke un programme, le processeur (1120) est configuré pour exécuter le programme, et lorsque le programme est exécuté, le processeur (1120) est configuré pour mettre en oeuvre le procédé selon l'une quelconque des revendications 1 à 6.

10. Système de communication sans fil (100), comprenant le dispositif de réseau d'accès (1100) selon la revendication 9 et un dispositif terminal (1200), le dispositif terminal (1200) comprenant un processeur (1230) et une mémoire (1210) couplée au processeur (1230), dans lequel la mémoire (1210) du dispositif terminal (1200) stocke un programme, le processeur (1230) du dispositif terminal (1200) est configuré pour exécuter le programme, et lorsque le programme est exécuté, le processeur (1230) du dispositif terminal (1200) est configuré pour mettre en oeuvre les étapes de procédé effectuées par le dispositif terminal (120) selon l'une quelconque des revendications 7 ou 8.

11. Support de stockage lisible par ordinateur, comprenant des instructions, dans lequel lorsque les instructions sont exécutées sur un processeur du dispositif de réseau d'accès (1100) selon la revendication 9, le dispositif de réseau d'accès (1100) exécute le procédé selon l'une quelconque des revendications 1 à 6.
